# EUROPÄISCHE PATENTSCHRIFT

(11) **EP 4 276 252 B1**
(45) Veröffentlichungstag und Bekanntmachung des Hinweises auf die Patenterteilung: **29.01.2025**
(21) Anmeldenummer: 23168287.3
(22) Anmeldetag: 17.04.2023
(51) Int. Cl.: E02F 9/08, E02F 9/20, B60T 1/00

(54) **MOBILE ARBEITSMASCHINE, INSBESONDERE RADLADER, MIT EINEM ELEKTRISCHEN ANTRIEBSMOTOR**
MOBILE WORKING MACHINE, IN PARTICULAR WHEEL LOADER, WITH AN ELECTRIC DRIVE MOTOR
MACHINE DE TRAVAIL MOBILE, EN PARTICULIER CHARGEUSE SUR ROUES, AVEC UN MOTEUR D'ENTRAÎNEMENT ÉLECTRIQUE

(30) Priorität: 11.05.2022 DE 102022111729
(43) Veröffentlichungstag der Anmeldung: 15.11.2023
(73) Patentinhaber: Weidemann GmbH, 34497 Korbach (DE)
(72) Erfinder: Geiger, Tom, 34225 Baunatal-Rengershausen (DE); Albach, Andreas, 34576 Homberg/Efze (DE)
(74) Vertreter: Otten, Roth, Dobler & Partner mbB Patentanwälte

(56) Entgegenhaltungen:
- WO-A1-2018/189202
- DE-U1- 202014 000 738

## Beschreibung

Die Erfindung betrifft eine mobile Arbeitsmaschine, insbesondere Radlader, Teleskoplader, Bagger, Dumper, Traktor oder dergleichen, mit einem Fahrzeugrahmen und mit einer Antriebseinheit zum Antreiben wenigstens eines um eine Antriebsachse drehbaren Antriebslaufrades, nach dem Oberbegriff des Anspruchs 1.

### Stand der Technik

Mobile Arbeitsmaschine, insbesondere Radlader, Teleskoplader, Bagger, Traktor oder dergleichen, mit einem Fahrzeugrahmen und mit einer Antriebseinheit zum Antreiben wenigstens eines Antriebsrades, werden heutzutage meist noch mit einem flüssigen Kraftstoff betrieben. Dabei kommen heute hauptsächlich dieselgetriebene Fahrzeuge zum Einsatz. Zwischenzeitlich sind bereits elektrisch angetriebene Maschinen mit einem aufladbaren Akkumulator bzw. elektrischen Energiespeicher im Einsatz.

Üblicherweise weisen diese mobilen Arbeitsmaschinen lösbar verbindbare Arbeitswerkzeuge auf, z.B. die mittels sog. "Schnellwechslern" bzw. "Wechselplatten" gehalten bzw. gelöst werden. Vielfach sind diese Arbeitswerkzeuge an einem Hubarm, Teleskoparm oder dergleichen angeordnet. Zum Heben und/oder Senken dieser als auch die zum Teil aktiv antriebbaren Werkzeuge wie Greifschaufel, Kehrbesen etc. werden bei sog. "vollelektrischen" Maschinen diese elektrisch und bei sog. "hybriden" Maschinen diese Komponenten mittels einem hydraulischen System betrieben.

In der DE 20 2014 000 738 U1 ist eine derartige Arbeitsmaschine beschrieben, wobei hier ein elektrischer Arbeitsantrieb bzw. E-Motor eine Hydraulikpumpe antriebt, um das hydraulische Werkzeug betrieben zu können. Ein zweiter, zentraler E-Motor treibt hier mittels einem Verteilergetriebe die Antriebs-/Laufräder bzw. die Hinter-/ Vorderachsen an. Alternativ kommt heutzutage auch ein zentraler E-Antrieb mit hydraulischer Wandlung und hydraulischen Radnabenantrieb zum Einsatz.

Um möglichst drehmomentstarke bzw. teure E-Motoren zu vermeiden ist eine gewisse Mindestübersetzung zwischen E-Motor und Laufrad und somit das zusätzliche Getriebe notwendig.

Nachteilig bei bisher bekannten mobilen Arbeitsmaschinen ist, dass neben dem Getriebe zudem eine Gelenkwelle eingesetzte werden muss, diese sind vergleichsweise schwer, benötigen viel Platz und haben eine nachteilige Bauhöhe zur Folge. Die zuvor genannte hydraulische Alternative ermöglicht zwar eine niedrigere Bauhöhe, hat allerdings systembedingt einen schlechten Wirkungsgrad.

Darüber hinaus sind üblicherweise neben dem Differential, auch noch das Bremssystem der Arbeitsmaschine unterzubringen, was die Platzverhältnisse weiter verschlechtert. Bei E-Antrieben wird derzeit eine Rekuperation mit dem E-Motor nicht als ausreichend sicher zugelassen, so dass (zusätzlich) ein separates Bremssystem vorzusehen ist. Derzeit üblich sind Bremsen, die direkt jeweils einem Laufrad zugeordnet und auf der jeweiligen Radnabe angeordnet sind. Dies ist kostenintensiv und benötigt vergleichsweise viel Platz.

### Aufgabe und Vorteile der Erfindung

Aufgabe der Erfindung ist es demgegenüber, eine mobile Arbeitsmaschine, insbesondere Radlader, Teleskoplader, Bagger, Dumper, Traktor oder dergleichen, vorzuschlagen, die wenigstens teilweise die Nachteile des Standes der Technik verbessert, insbesondere ein Antriebs- und/oder Bremssystem mit kompakten äußeren Abmessungen, vorzugsweise in Kombination mit einem effizienten E-Antrieb und/oder mit einem kostengünstigen Aufbau zu realisieren.

Diese Aufgabe wird, ausgehend von einer mobilen Arbeitsmaschine der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße, mobile Arbeitsmaschine dadurch aus, dass eine in Wirkverbindung stehende Bremsreihe, bestehend aus dem Bremselement der Bremseinheit und der Getriebeeinheit sowie dem wenigstens einen Antriebslaufrad, vorgesehen ist, wobei die Getriebeeinheit in/innerhalb der Bremsreihe wenigstens zwischen dem wenigstens einen Antriebslaufrad und dem Bremselement angeordnet ist, so dass eine Bremskraft der Bremseinheit und/oder des Bremselementes über die Getriebeeinheit auf das wenigstens eine Antriebslaufrad übertragbar ist.

Mit Hilfe dieser vorteilhaften Bremsreihe bzw. "Bremskette" kann einerseits die Bremskraft bzw. das Bremsdrehmoment mittels der Getriebeeinheit in vorteilhafter Weise gewandelt bzw. verändert/vergrößert werden. Andererseits wird hiermit auch die Getriebeeinheit doppelt bzw. zweifach genutzt/verwendet, so dass eine Einsparung des wirtschaftlichen bzw. konstruktiven Aufwandes und zudem auch der benötigte Bauraum bzw. Platz vorteilhaft klein bzw. gering ausfallen kann.

Gerade die erfindungsgemäße Transformation der/des Bremskraft/ Bremsmomentes der Bremseinheit bzw. des Bremselementes mittels der Getriebeeinheit, so dass eine vergleichsweise große Bremskraft bzw. Bremsmoment auf das Laufrad und somit ein vergleichsweise starkes/kräftiges Bremsen der mobilen Arbeitsmaschine wie ein Radlader oder dergleichen verwirklicht werden kann, ermöglicht eine besonders klein dimensionierte und kostengünstige Bremseinheit bzw. Bremselement.

Beispielsweise kann die Bremseinheit eine vorteilhafte Bremsscheibe als Bremselement umfassen. Dies ist besonders kostengünstig und platzsparend umsetzbar. Zudem kann auf bereits handelsübliche Bremseinheiten bzw. Bremselemente/Bremsscheiben zurückgegriffen werden, was die Kosten nochmals vorteilhaft senken kann. Diese ggf. handelsüblichen Bremseinheiten können in vorteilhafter Weise quasi "parallel" zum E-Motor an der Getriebeeinheit angeordnet bzw. betrieben werden. So kann die Getriebeeinheit die vorteilhafte Doppelnutzung realisieren und zudem flexibel an die beengten Platzverhältnisse angepasst werden.

Es ist jedoch grundsätzlich auch denkbar, dass die Bremseinheit in vorteilhafter Weise quasi "seriell" bzw. "in Reihe" mit/zum E-Motor an der Getriebeeinheit angeordnet bzw. betrieben werden. So ist räumlich und/oder in der Wirkkette bzw. Wirkverbindung betrachtet in diesem denkbaren Fall der E-Motor zwischen Bremseinheit und Getriebeeinheit oder alternativ die Bremseinheit zwischen dem E-Motor und der Getriebeeinheit angeordnet/eingebunden.

Vorzugsweise ist das Antriebslaufrad der Antriebsachse wenigstens als linkes und/oder als rechtes Antriebslaufrad ausgebildet, wobei insbesondere die Antriebsachse zwischen dem linken und dem rechten Antriebslaufrad wenigstens eine Differentialeinheit aufweist. Hiermit wird der Antrieb bzw. das Bremsen auf beiden Seiten verbessert.

In einer vorteilhaften Variante der Erfindung ist eine in Wirkverbindung stehende Antriebsreihe, bestehend aus dem Elektromotor und der Getriebeeinheit sowie dem wenigstens einen Antriebslaufrad, vorgesehen, wobei die Bremseinheit zwischen Elektromotor und Differentialeinheit oder dem wenigstens einen Antriebslaufrad angeordnet ist. Dies ist u.a. besonders kostengünstig und platzsparend umsetzbar.

Vorteilhaftweise ist die Antriebsdrehzahl des Antriebs der Getriebeeinheit größer als die Abtriebsdrehzahl des Abtriebs, so dass die Getriebeeinheit eine Untersetzung aufweist. Die hiermit realisierte vorteilhafte Transformation der/des Bremskraft/ Bremsmomentes der Bremseinheit bzw. des Bremselementes mittels der Getriebeeinheit generiert eine vergleichsweise große Bremskraft bzw. Bremsmoment auf das Laufrad und somit ein vergleichsweise starkes/kräftiges Bremsen mit einer relativ kleinen Bremseinheit. Die ermöglicht eine besonders kostengünstige Umsetzung der Erfindung.

In einer besonderen Weiterbildung der Erfindung ist die Antriebsachse als Hinterachse und/oder Vorderachse ausgebildet, wobei in vorteilhafter Weise die Hinterachse wenigstens eine als die Bremseinheit ausgebildete, ein Hinterachsen-Bremselement aufweisende Hinterachsen-Bremseinheit und wenigstens eine als die Getriebeeinheit ausgebildete Hinterachsen-Getriebeeinheit umfasst, wobei die Hinterachsen-Getriebeeinheit wenigstens zwischen dem wenigstens einen Antriebslaufrad der Hinterachse und dem Hinterachsen-Bremselement angeordnet ist, so dass eine Hinterachsen-Bremskraft der Hinterachsen-Bremseinheit und/oder des Hinterachsen-Bremselementes über die Hinterachsen-Getriebeeinheit auf das wenigstens eine Antriebslaufrad der Hinterachse übertragbar ist, und dass die Vorderachse wenigstens eine als die Bremseinheit ausgebildete, ein Vorderachsen-Bremselement aufweisende Vorderachsen-Bremseinheit und wenigstens eine als die Getriebeeinheit ausgebildete Vorderachsen-Getriebeeinheit umfasst, wobei die Vorderachsen-Getriebeeinheit wenigstens zwischen dem wenigstens einen Antriebslaufrad der Vorderachse und dem Vorderachsen-Bremselement angeordnet ist, so dass eine Vorderachsen-Bremskraft der Vorderachsen-Bremseinheit und/oder des Vorderachsen-Bremselementes über die Vorderachsen-Getriebeeinheit auf das wenigstens eine Antriebslaufrad der Vorderachse übertragbar ist.

So kann in vorteilhafter Weise u.a. eine zentrale Gelenkwelle entfallen, was u.a. zu einer besonders kostengünstigen und platzsparenden Umsetzung der Erfindung führt kann.

Vorzugsweise umfasst die Antriebseinheit wenigstens die Getriebeeinheit, wobei die Getriebeeinheit wenigstens zwischen dem Elektromotor und dem Antriebslaufrad angeordnet ist, so dass eine Antriebskraft des Elektromotors über die Getriebeeinheit auf das wenigstens eine Antriebslaufrad übertragbar ist. Dies ermöglicht eine besonders vorteilhafte Antriebskette bzw. Wirkverbindung der relevantesten Antriebskomponenten.

In einer vorteilhaften Variante der Erfindung umfasst die Hinterachse wenigstens eine als die Antriebseinheit ausgebildete, einen Hinterachsen-Elektromotor aufweisende Hinterachsen-Antriebseinheit und wenigstens eine als die Getriebeeinheit ausgebildete Hinterachsen-Getriebeeinheit, wobei die Hinterachsen-Getriebeeinheit wenigstens zwischen dem wenigstens einen Antriebslaufrad der Hinterachse und dem Hinterachsen-Elektromotor angeordnet ist, so dass eine Hinterachsen-Antriebskraft des Hinterachsen-Elektromotors über die Hinterachsen-Getriebeeinheit auf das wenigstens eine Antriebslaufrad der Hinterachse übertragbar ist, und dass die Vorderachse wenigstens eine als die Antriebseinheit ausgebildete, einen Vorderachsen-Elektromotor aufweisende Vorderachsen-Antriebseinheit und wenigstens eine als die Getriebeeinheit ausgebildete Vorderachsen-Getriebeeinheit umfasst, wobei die Vorderachsen-Getriebeeinheit wenigstens zwischen dem wenigstens einen Antriebslaufrad der Vorderachse und dem Vorderachsen-Elektromotor angeordnet ist, so dass eine Vorderachsen-Antriebskraft des Vorderachsen-Elektromotors über die Vorderachsen-Getriebeeinheit auf das wenigstens eine Antriebslaufrad der Vorderachse übertragbar ist. Dies gewährleistet, dass die Antriebskette bzw. Wirkverbindung der relevantesten Antriebskomponenten besonders kostengünstig und platzsparend umgesetzt werden kann.

Vorzugsweise weist der Elektromotor und/oder der Vorderachsen-Elektromotor und/oder der Hinterachsen-Elektromotor wenigstens ein Motorengehäuse auf, wobei am Motorengehäuse wenigstens eine Bremsvorrichtung zum Bremsen einer Motorwelle angeordnet ist. Hiermit kann eine besonders kompakte und platzsparende Bauweise verwirklicht werden.

In einer bevorzugten Variante der Erfindung erfolgt die Energieversorgung des Elektromotors der Achse bzw. des Fahrantriebes und insbesondere der ganzen Arbeitsmaschine und damit auch ggf. des (aktiven) Werkzeuges und des oftmals vorhandenen Hubarmes, Teleskoparmes, Hebevorrichung oder dergleichen aus dem elektrischen Energiespeicher bzw. Akku erfolgt.

In einer besonderen Ausführungsform der Erfindung ist wenigstens ein Pumpenmotor zum Antreiben einer Hydraulikpumpe eines eine Hydraulikflüssigkeit umfassenden Hydrauliksystems vorgesehen. Hiermit kann eine vorteilhafte hybride Betriebsweise mit z.B. einem elektrischer Fahr-Antrieb der Arbeitsmaschine oder einem E-Motor als Wandler der elektrischen Energie des elektrischen Energiespeichers mit von diesem angetriebener Hydraulikpumpe, die einen Hydraulik-Fahrantrieb/-Motor antreibt, und/oder ein hydraulisches Betreiben des Werkzeuges und/oder der verstellbaren/drehbaren/beweglichen Tragvorrichtung wie z.B. eines Hubarmes, Teleskoparmes oder dergleichen verwirklicht werden.

Bei Letzterem ist in vorteilhafter Weise der Pumpenmotor und/oder die Hydraulikpumpe und/oder das Hydrauliksystem zum Betreiben des Arbeitswerkzeuges und/oder der Werkzeughaltevorrichtung und/oder der Tragvorrichtung ausgebildet. Somit können die Vorteile einer hydraulischen Betriebsweise der Tragvorrichtung bzw. des Hubarmes, Teleskoparmes etc. und/oder eines hydraulischen, aktiven Werkzeuges wie eines Greifarmes etc. mit einem E-Antrieb der mobilen Arbeitsmaschine gemäß der Erfindung in vorteilhafter Weise kombiniert werden.

Beispielsweise weist die mobile Arbeitsmaschine eine vorteilhafte Lenkung bzw. Verstellbarkeit der einzelnen Laufräder, um z.B. eine Allradlenkung der Arbeitsmaschine zu verwirklichen. Vorzugsweise ist wenigstens eine Knick-Lenkung vorgesehen. Hierdurch kann auf die gerade bei Radladern bewährte Knicklenkung bzw. auf bisher handelsübliche Fahrzeugrahmen bzw. Karosserien zurückgegriffen werden, was sich vorteilhaft auf die Kosten und die Betriebsweise/-kosten auswirkt.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: einen schematischen Querschnitt einer mobilen Arbeitsmaschine, insbesondere Radlader, gemäß der Erfindung und
- Figur 2: eine schematische Seitenansicht der mobilen Arbeitsmaschine, insbesondere des Radladers, gemäß Figur 1.

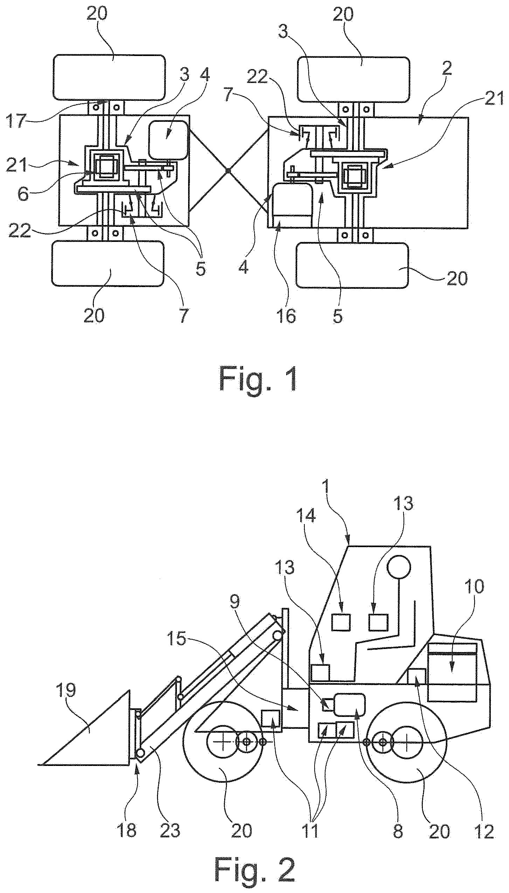

In Figur 1 ist eine mobile Arbeitsmaschine 1 bzw. ein Radlader 1 schematisch in einem horizontalen Schnitt dargestellt. Der Radlader 1 umfasst einen Fahrzeugrahmen 2, mindestens einen elektrischen Akku bzw. Energiespeicher 10 zum Speichern elektrischer Energie, wobei der/die Energiespeicher 10 v.a. für die Versorgung des Fahrantriebs und die Arbeitsfunktionen dienen.

Weiterhin sind hier zwei Antriebsachsen 3 vorgesehen, wobei jede Achse 3 von mindestens einem separaten Antriebsmotor 4 bzw. E-Motor 4 angetrieben wird. Die E-Motoren 4 sind jeweils in vorteilhafter Weise über mindestens ein Getriebe 5 bzw. eine Übersetzungsstufe 5 an ein Differential 6 angebunden bzw. realisieren eine vorteilhafte Antriebskette gemäß der Erfindung.

Darüber hinaus ist mindestens eine Bremseinheit 7 mit einem Bremselement 22 bzw. ein Betriebsbremssystem 7 und in einer vorteilhaften Variante zusätzlich mindestens ein Hilfsbremssystem 16 direkt an einem der E-Motoren 4 und/oder an/in einem Getriebe 5 bzw. sog. Zwischengelege 5 und/oder vor sog. Endabtrieben 17 bzw. den Laufrädern 20 eingreift. Somit ist bei dem schematisch dargestellten Ausführungsbeispiel quasi ein "paralleler" und zudem ein "serieller" Aufbau bzw. Wirkverbindung im Sinn der Erfindung realisiert. Das heißt nämlich, dass das Hilfsbremssystem 16 in Bezug auf die Wirkverbindung "seriell" bzw. in Reihe mit dem E-Motor 4, dem Getriebe 5 und dem/den Laufrädern 20, insb. auch bzgl. dem Differential 6, angeordnet ist. Dagegen ist im Sinn der Erfindung die Bremseinheit 7 "parallel" in Bezug auf den E-Motor 4 am Getriebe 5 angeordnet bzw. in Wirkverbindung. Wie in der schematischen Figur 1 ersichtlich ist, weist das Getriebe 5 einerseits für den E-Motor 4 und andererseits für die Bremseinheit 7 jeweils eine andere Übersetzung bzw. Drehzahl-/ Drehmomenten-Wandlung auf, so dass eine vorteilhafte Anpassung der transformierten/benötigten Kräfte/Momente realisierbar ist.

Mindestens ein weiterer, optional vorhandener E-Motor 8 bzw. Arbeitsmotors 8, der eine Pumpe 9 antreibt, ist vorgesehen, mit dem die Arbeitsfunktionen wie z.B. Heben und/oder Senken eines Hubarmes 23 und/oder aktiv betätigbaren Arbeitswerkzeuges 19, z.B. im Fall einer Greifschaufel oder eines Kehrbesens (beides nicht dargestellt) realisiert werden können.

Weitere vorteilhafte Eigenschaften bzw. Merkmale der erfindungsgemäßen mobilen Arbeitsmaschine 1 können einzeln und/oder kombiniert verwirklicht werden, wie z.B.:
- Jeder E-Motor 4 wird in vorteilhafter Weise über einen Kanal eines elektronischen Umrichters 11 angesteuert, wobei beispielsweise eine Kontrolleinheit 12 bzw. Recheneinheit 12 den/die Umrichter 11 bzw. Umrichterkanäle ansteuert,
- vorteilhafte Sollwertvorgabe des Antriebs über mindestens ein Stellglied 13, 14 wie z.B. ein Fuß- oder Handsteller 13 bzw. ein Joy-Stick 14 und Fußpedal 13,
- vorteilhafte Ansteuerung eines E-Motors 8 bzw. Arbeitsmotors 8 vorzugsweise über eine Kontrolleinheit 14,
- elektrische und/oder hydraulische Leitungen (nicht näher dargestellt) werden in vorteilhafter Weise über ein zentrales Knickgelenk 15 geführt,
- Energiespeicher 10 weist in vorteilhafter Weise eine Kontrolleinheit 16, insb. eine Schutzeinrichtung 16, z.B. für Lade- und/oder Entladeregelung, Überstrom und/oder Kurzschluss auf,
- das System bzw. die mobile Arbeitsmaschine 1 kann auch mit zusätzlichen, optionalen Endabtrieben z.B. ein Planetengetriebe im Rad 20 oder Portalgetriebe im Rad 20 ausgerüstet werden.

Mit der Erfindung können u.a. folgende Vorteile erreicht werden:
- Kompakter Achsantrieb, was deutliche Bauraumvorteile gegenüber einem Zentralantrieb mit Gelenkwelle gemäß dem Stand der Technik ergibt,
- kostengünstigere Lösung im Vergleich zu einem Radlader 1 mit herkömmlichem Radnabenantrieb gemäß dem Stand der Technik und
- bessere Effizienz im Vergleich zu elektrohydraulischen Antrieben gemäß dem Stand der Technik.

Vorzugsweise ist gemäß der Erfindung an die Differentiale 6 der vorteilhaften Starachsen 3 mindestens eine Getriebestufe 5 mit E-Motor 4 angeflanscht. Die Bremse 7, 16 greift direkt am E-Motor 4 oder in der Getriebestufe 5 ein.

In einer vorteilhaften Variante der Erfindung ist eine kompakte, insb. einstückig händelbare Achseinheit 21 vorgesehen, die zumindest die Achse 3 bzw. Starachse 3, das Differential 6, das Getriebe 5, die Bremseinheit 7 und/oder 16 sowie den E-Motor 4 umfasst. Hiermit kann eine vorteilhafte Herstellung, Montage und Demontage sowie Einbauvarianten verwirklicht werden.

Darüber hinaus kann gemäß einer vorteilhaften Variante der Erfindung eine Anbindung des Getriebes 5 bzw. Zwischengetriebes 5 an das Differential 6 auch gegenüber der dargestellten, schematischen Variante um 90° abgewinkelt z.B. über Kegelräder erfolgen. Die Motorachse des E-Motors 4 zeigt dann in Fahrtrichtung. Dies kann ebenso auch mit der Bremse 7 umgesetzt werden.

Die Position der Bremse 7 kann am E-Motor 4 oder an einer Zwischenwelle im Getriebe 5 erfolgen. Die Bremse 7 kann auch eine Scheibenbremse oder eine elektromagnetische Federkraftbremse sein.

Die Achse 3 kann auch zusätzliche Endabtriebe wie z.B. Planetengetriebe oder Portalgetriebe verfügen. Weiterhin können die Achse 3 bzw. die Achsen 3 auch mit lenkbaren Endabtrieben versehen werden. So kann z.B. in vorteilhafter Weise ein Allradlenker statt ein Knicklenker verwirklicht werden.

Die E-Motoren 4 können grundsätzlich in Fahrtrichtung betrachtet vor oder hinter der Achse 3 platziert werden. Beispielsweise durch Drehen der Achse 3 bzw. der gesamten Achseinheit 21 bzw. Baueinheit 21 kann eine einzige bzw. einheitliche Achseinheit 21 hergestellt werden und dennoch in dieser Weise vor bzw. hinter der Achse 3 angeordnet werden.

Es kann auch nur eine angetriebene Achse 3 verbaut werden. Entsprechend kann auch nur eine gebremste Achse 3 vorgesehen bzw. verbaut werden, d.h. eine Bremse an der zweiten Achse 3 entfällt in diesem Fall.

Generell können gemäß der Erfindung, um drehmomentstarke bzw. teure E-Motoren 4 zu vermeiden, immer eine gewisse Mindestübersetzung zwischen E-Motor und Rad vorgesehen werden. Hierfür sind das/die Getriebe 5 gemäß der Erfindung vorgesehen und werden in vorteilhafter Weise mittels Doppelnutzung sowohl für die Übersetzung des Antriebsdrehmomentes als auch für die Übersetzung des Bremsmomentes verwendet. So kann, um eine kompakte bzw. günstige Bremse einsetzen zu können, gemäß der Erfindung eine gewisse Mindestübersetzung zwischen Bremse 7, 16 und dem Rad 20 vorgesehen werden.

Jeder E-Motor 4, 8 wird in vorteilhafter Weise über einen Umrichter-Kanal angesteuert. Die Motoren sollten möglichst einen Drehzahlsensor aufweisen (nicht näher dargestellt), um eine vorteilhafte Steuerung/Kontrolle zu ermöglichen. Entsprechend sollten die E-Motoren 4, 8 einen vorteilhaften Temperatursensor aufweisen (nicht näher dargestellt).

Moderne E-Maschinen bzw. mobile E-Radlader 1 oder dergleichen verwenden meist Batterien/Akkus mit einen vorteilhaften sog.

Managementsystem (BMS). Das BMS kann in vorteilhafter Weise eine Rekuperation regulieren. Die Rekuperation kann bislang aufgrund gesetzlicher Vorschriften nicht als Betriebsbremse eingesetzt werden. Jeder Arbeitsmaschine 1 benötigt deswegen aufgrund dieser gesetzlichen Vorgaben eine mechanische Betriebsbremse, nämlich Bremse 7, 16.

Grundsätzlich kann gemäß der Erfindung die nachfolgend aufgeführten Vorteile bzw. Wirkungen gegenüber dem Stand der Technik realisiert werden: Einerseits der energieeffiziente Direktantrieb und andererseits durch den aufgelösten Antriebstrang kann der Maschinenaufbau vollkommen neu gedacht und realisiert werden. Dementsprechend können neue Maschinenkonzepte bzgl. Anordnung, Größenklassen etc. nun möglich und sinnvoll umgesetzt werden.

### Bezugszeichenliste

- 1: Radlader
- 2: Fahrzeugrahmen
- 3: Antriebsachse
- 4: E-Motor
- 5: Getriebe
- 6: Differential
- 7: Bremseinheit
- 8: E-Motor
- 9: Hydraulik-Pumpe
- 10: Energiespeicher/Akku
- 11: Umrichter
- 12: Kontrolleinheit
- 13: Stellglied
- 14: Kontrolleinheit
- 15: Knickgelenk
- 16: Schutzeinrichtung
- 17: Endabtrieb
- 18: Werkzeughalter
- 19: Arbeitswerkzeug
- 20: Laufrad
- 21: Achseinheit
- 22: Bremselement
- 23: Hubarm

## Patentansprüche

1. Mobile Arbeitsmaschine (1), insbesondere Radlader (1), Teleskoplader, Bagger, Dumper, Traktor oder dergleichen, mit einem Fahrzeugrahmen (2) und mit einer Antriebseinheit (21) zum Antreiben wenigstens eines um eine Antriebsachse (3) drehbaren Antriebslaufrades (20), wobei die Antriebseinheit (21) zumindest einen Elektromotor (4) und wenigstens einen elektrischen Energiespeicher (10) zum Speichern von Antriebsenergie für den Elektromotor (4) umfasst, wobei wenigstens eine Getriebeeinheit (5) mit einem eine Antriebsdrehzahl aufweisenden Antrieb und einem eine Abtriebsdrehzahl aufweisenden Abtrieb vorgesehen ist, wobei wenigstens eine zum Elektromotor (4) separate, zumindest ein Bremselement (22) aufweisende Bremseinheit (7, 16) zum Bremsen des wenigstens einen Antriebslaufrades (20) vorgesehen ist, wobei wenigstens eine Werkzeughaltevorrichtung (18, 23) zum Halten eines Arbeitswerkzeugs (19) vorgesehen ist und/oder die Antriebseinheit (21) wenigstens einen vom Elektromotor (4) angetriebenen hydrostatischen Antriebsmotor zum Antreiben des Antriebslaufrades (20) und/oder der Werkzeughaltevorrichtung (18, 23) umfasst, wobei insbesondere die Werkzeughaltevorrichtung (18, 23) wenigstens eine um eine Schwenkachse verschwenkbare Tragvorrichtung (23), z.B. Hubarm (23) und/oder Teleskopausleger und/oder Dreipunkt-Hebevorrichtung, umfasst, wobei insbesondere eine Kontrolleinheit (12, 14) zur elektrischen und/oder elektronischen Kontrolle des Elektromotors (4) und/oder des Energiespeichers (10) vorgesehen ist, **dadurch gekennzeichnet, dass** eine in Wirkverbindung stehende Bremsreihe, bestehend aus dem Bremselement (22) der Bremseinheit (7, 16) und der Getriebeeinheit (5) sowie dem wenigstens einen Antriebslaufrad (20), vorgesehen ist, wobei die Getriebeeinheit (5) wenigstens zwischen dem wenigstens einen Antriebslaufrad (20) und dem Bremselement (22) angeordnet ist, so dass eine Bremskraft der Bremseinheit (7, 16) und/oder des Bremselementes (22) über die Getriebeeinheit (5) auf das wenigstens eine Antriebslaufrad (20) übertragbar ist.

2. Arbeitsmaschine nach Anspruch 1, **dadurch gekennzeichnet, dass** das Antriebslaufrad (20) der Antriebsachse (3) wenigstens als linkes und/oder als rechtes Antriebslaufrad (20) ausgebildet ist, wobei insbesondere die Antriebsachse (3) zwischen dem linken und dem rechten Antriebslaufrad (20) wenigstens eine Differentialeinheit (6) aufweist.

3. Arbeitsmaschine nach einem der vorgenannten Ansprüche, **dadurch gekennzeichnet, dass** eine in Wirkverbindung stehende Antriebsreihe, bestehend aus dem Elektromotor (4) und der Getriebeeinheit (5) sowie dem wenigstens einen Antriebslaufrad (20), vorgesehen ist, wobei die Bremseinheit (4) zwischen Elektromotor (4) und Differentialeinheit (6) oder dem wenigstens einen Antriebslaufrad (20) angeordnet ist.

4. Arbeitsmaschine nach einem der vorgenannten Ansprüche, **dadurch gekennzeichnet, dass** die Antriebsdrehzahl des Antriebs der Getriebeeinheit (5) größer als die Abtriebsdrehzahl des Abtriebs ist, so dass die Getriebeeinheit (5) eine Untersetzung aufweist.

5. Arbeitsmaschine nach einem der vorgenannten Ansprüche, **dadurch gekennzeichnet, dass** die Antriebsachse (3) als Hinterachse und/oder Vorderachse ausgebildet ist.

6. Arbeitsmaschine nach einem der vorgenannten Ansprüche, **dadurch gekennzeichnet, dass** die Hinterachse wenigstens eine als die Bremseinheit (7, 16) ausgebildete, ein Hinterachsen-Bremselement aufweisende Hinterachsen-Bremseinheit und wenigstens eine als die Getriebeeinheit (5) ausgebildete Hinterachsen-Getriebeeinheit umfasst, wobei die Hinterachsen-Getriebeeinheit wenigstens zwischen dem wenigstens einen Antriebslaufrad (20) der Hinterachse und dem Hinterachsen-Bremselement angeordnet ist, so dass eine Hinterachsen-Bremskraft der Hinterachsen-Bremseinheit und/oder des Hinterachsen-Bremselementes über die Hinterachsen-Getriebeeinheit auf das wenigstens eine Antriebslaufrad (20) der Hinterachse übertragbar ist,
und dass die Vorderachse wenigstens eine als die Bremseinheit (7, 16) ausgebildete, ein Vorderachsen-Bremselement aufweisende Vorderachsen-Bremseinheit und wenigstens eine als die Getriebeeinheit (5) ausgebildete Vorderachsen-Getriebeeinheit umfasst, wobei die Vorderachsen-Getriebeeinheit wenigstens zwischen dem wenigstens einen Antriebslaufrad (20) der Vorderachse und dem Vorderachsen-Bremselement angeordnet ist, so dass eine Vorderachsen-Bremskraft der Vorderachsen-Bremseinheit und/oder des Vorderachsen-Bremselementes über die Vorderachsen-Getriebeeinheit auf das wenigstens eine Antriebslaufrad der Vorderachse übertragbar ist.

7. Arbeitsmaschine nach einem der vorgenannten Ansprüche, **dadurch gekennzeichnet, dass** die Antriebseinheit (21) wenigstens die Getriebeeinheit (5) umfasst, wobei die Getriebeeinheit (5) wenigstens zwischen dem Elektromotor (4) und dem Antriebslaufrad (20) angeordnet ist, so dass eine Antriebskraft des Elektromotors (4) über die Getriebeeinheit (5) auf das wenigstens eine Antriebslaufrad (20) übertragbar ist.

8. Arbeitsmaschine nach einem der vorgenannten Ansprüche, **dadurch gekennzeichnet, dass** die Hinterachse wenigstens eine als die Antriebseinheit (21) ausgebildete, einen Hinterachsen-Elektromotor aufweisende Hinterachsen-Antriebseinheit und wenigstens eine als die Getriebeeinheit (5) ausgebildete Hinterachsen-Getriebeeinheit umfasst, wobei die Hinterachsen-Getriebeeinheit wenigstens zwischen dem wenigstens einen Antriebslaufrad (20) der Hinterachse und dem Hinterachsen-Elektromotor angeordnet ist, so dass eine Hinterachsen-Antriebskraft des Hinterachsen-Elektromotors über die Hinterachsen-Getriebeeinheit auf das wenigstens eine Antriebslaufrad (20) der Hinterachse übertragbar ist,
und dass die Vorderachse wenigstens eine als die Antriebseinheit (21) ausgebildete, einen Vorderachsen-Elektromotor aufweisende Vorderachsen-Antriebseinheit und wenigstens eine als die Getriebeeinheit (5) ausgebildete Vorderachsen-Getriebeeinheit umfasst, wobei die Vorderachsen-Getriebeeinheit wenigstens zwischen dem wenigstens einen Antriebslaufrad (20) der Vorderachse und dem Vorderachsen-Elektromotor angeordnet ist, so dass eine Vorderachsen-Antriebskraft des Vorderachsen-Elektromotors über die Vorderachsen-Getriebeeinheit auf das wenigstens eine Antriebslaufrad (20) der Vorderachse übertragbar ist.

9. Arbeitsmaschine nach einem der vorgenannten Ansprüche, **dadurch gekennzeichnet, dass** der Elektromotor (4) und/oder der Vorderachsen-Elektromotor und/oder der Hinterachsen-Elektromotor wenigstens ein Motorengehäuse aufweist, wobei am Motorengehäuse wenigstens eine Bremsvorrichtung (16) zum Bremsen einer Motorwelle angeordnet ist.

10. Arbeitsmaschine nach einem der vorgenannten Ansprüche, **dadurch gekennzeichnet, dass** wenigstens ein Pumpenmotor (9) zum Antreiben einer Hydraulikpumpe eines eine Hydraulikflüssigkeit umfassenden Hydrauliksystems vorgesehen ist.

11. Arbeitsmaschine nach einem der vorgenannten Ansprüche, **dadurch gekennzeichnet, dass** der Pumpenmotor (9) und/oder die Hydraulikpumpe und/oder das Hydrauliksystem zum Betreiben des Arbeitswerkzeuges (19) und/oder der Werkzeughaltevorrichtung (18, 23) und/oder der Tragvorrichtung (23) ausgebildet ist.

12. Arbeitsmaschine nach einem der vorgenannten Ansprüche, **dadurch gekennzeichnet, dass** wenigstens eine Knick-Lenkung (15) vorgesehen ist.

## Claims

1. Mobile working machine (1), in particular wheel loader (1), telescopic loader, digger, dumper, tractor or the like, having a vehicle frame (2) and having a drive unit (21) for driving at least one driving running wheel (20), which is rotatable about a drive axle (3), wherein the drive unit (21) comprises at least one electric motor (4) and at least one electrical energy store (10) for storing driving energy for the electric motor (4), wherein at least one transmission unit (5) with a drive having a driving rotational speed and with an output having an output rotational speed is provided, wherein at least one brake unit (7, 16) which is separate from the electric motor (4), has at least one braking element (22) and is intended for braking the at least one driving running wheel (20) is provided, wherein at least one tool-holding device (18, 23) for holding a working tool (19) is provided, and/or the drive unit (21) comprises at least one hydrostatic drive motor, which is driven by the electric motor (4), for driving the driving running wheel (20) and/or the tool-holding device (18, 23), wherein in particular the tool-holding device (18, 23) comprises at least one supporting device (23) which is pivotable about a pivot axis, e.g. lifting arm (23) and/or telescopic boom and/or three-point lifting device, wherein in particular a control unit (12, 14) for electrically and/or electronically controlling the electric motor (4) and/or the energy store (10) is provided, **characterized in that** an operatively connected braking series, consisting of the braking element (22) of the brake unit (7, 16) and the transmission unit (5) and the at least one driving running wheel (20), is provided, wherein the transmission unit (5) is arranged at least between the at least one driving running wheel (20) and the braking element (22) such that a braking force of the brake unit (7, 16) and/or of the braking element (22) can be transmitted via the transmission unit (5) to the at least one driving running wheel (20).

2. Working machine according to Claim 1, **characterized in that** the driving running wheel (20) of the drive axle (3) is in the form at least of a left and/or a right driving running wheel (20), wherein in particular the drive axle (3) between the left and the right driving running wheel (20) has at least one differential unit (6) .

3. Working machine according to either of the preceding claims, **characterized in that** an operatively connected driving series, consisting of the electric motor (4) and the transmission unit (5) and the at least one driving running wheel (20), is provided, wherein the brake unit (4) is arranged between the electric motor (4) and differential unit (6) or the at least one driving running wheel (20).

4. Working machine according to one of the preceding claims, **characterized in that** the driving rotational speed of the drive of the transmission unit (5) is greater than the output rotational speed of the output, and therefore the transmission unit (5) has a gear reduction.

5. Working machine according to one of the preceding claims, **characterized in that** the drive axle (3) is in the form of a rear axle and/or front axle.

6. Working machine according to one of the preceding claims, **characterized in that** the rear axle comprises at least one rear-axle brake unit, which is in the form of the brake unit (7, 16) and has a rear-axle braking element, and at least one rear-axle transmission unit, which is in the form of the transmission unit (5), wherein the rear-axle transmission unit is arranged at least between the at least one driving running wheel (20) of the rear axle and the rear-axle braking element such that a rear-axle braking force of the rear-axle brake unit and/or of the rear-axle braking element can be transmitted via the rear-axle transmission unit to the at least one driving running wheel (20) of the rear axle, and **in that** the front axle comprises at least one front-axle brake unit, which is in the form of the brake unit (7, 16) and has a front-axle braking element, and at least one front-axle transmission unit, which is in the form of the transmission unit (5), wherein the front-axle transmission unit is arranged at least between the at least one driving running wheel (20) of the front axle and the front-axle braking element such that a front-axle braking force of the front-axle brake unit and/or of the front-axle braking element can be transmitted via the front-axle transmission unit to the at least one driving running wheel of the front axle.

7. Working machine according to one of the preceding claims, **characterized in that** the drive unit (21) comprises at least the transmission unit (5), wherein the transmission unit (5) is arranged at least between the electric motor (4) and the driving running wheel (20) such that a driving force of the electric motor (4) can be transmitted via the transmission unit (5) to the at least one driving running wheel (20).

8. Working machine according to one of the preceding claims, **characterized in that** the rear axle comprises at least one rear-axle drive unit, which is in the form of the drive unit (21) and has a rear-axle electric motor, and at least one rear-axle transmission unit, which is in the form of the transmission unit (5), wherein the rear-axle transmission unit is arranged at least between the at least one driving running wheel (20) of the rear axle and the rear-axle electric motor such that a rear-axle driving force of the rear-axle electric motor can be transmitted via the rear-axle transmission unit to the at least one driving running wheel (20) of the rear axle, and **in that** the front axle comprises at least one front-axle drive unit, which is in the form of the drive unit (21) and has a front-axle electric motor, and at least one front-axle transmission unit, which is in the form of the transmission unit (5), wherein the front-axle transmission unit is arranged at least between the at least one driving running wheel (20) of the front axle and the front-axle electric motor such that a front-axle driving force of the front-axle electric motor can be transmitted via the front-axle transmission unit to the at least one driving running wheel (20) of the front axle.

9. Working machine according to one of the preceding claims, **characterized in that** the electric motor (4) and/or the front-axle electric motor and/or the rear-axle electric motor have/has at least one motor housing, wherein at least one braking device (16) for braking a motor shaft is arranged on the motor housing.

10. Working machine according to one of the preceding claims, **characterized in that** at least one pump motor (9) for driving a hydraulic pump of a hydraulic system comprising a hydraulic fluid is provided.

11. Working machine according to one of the preceding claims, **characterized in that** the pump motor (9) and/or the hydraulic pump and/or the hydraulic system are/is designed for operating the working tool (19) and/or the tool-holding device (18, 23) and/or the supporting device (23) .

12. Working machine according to one of the preceding claims, **characterized in that** at least one articulated steering system (15) is provided.

## Revendications

1. Machine de travail mobile (1), en particulier chargeur à roues (1), chargeur télescopique, excavateur, tombereau, tracteur ou similaire, comprenant un châssis de véhicule (2) et une unité d'entraînement (21) destinée à entraîner au moins une roue d'entraînement (3) rotative sur un essieu d'entraînement (20), l'unité d'entraînement (21) comprenant au moins un moteur électrique (4) et au moins un accumulateur d'énergie électrique (10) destiné à stocker de l'énergie d'entraînement destinée au moteur électrique (4), au moins une unité de transmission (5) étant pourvue d'un entraînement présentant une vitesse de rotation d'entraînement et une sortie présentant une vitesse de rotation de sortie, au moins une unité de freinage (7, 16), séparée du moteur électrique (4) et pourvue d'au moins un élément de freinage (22), étant prévue pour freiner l'au moins une roue d'entraînement (20), au moins un dispositif de retenue d'outil (18, 23) étant prévu pour maintenir un outil de travail (19) et/ou l'unité d'entraînement (21) comprenant au moins un moteur d'entraînement hydrostatique entraîné par le moteur électrique (4) et destiné à entraîner l'entraînement de la roue d'entraînement (20) et/ou le dispositif de retenue d'outil (18, 23), en particulier le dispositif de retenue d'outil (18, 23) comprenant au moins un dispositif de support (23) qui peut pivoter sur un axe de pivotement, par exemple un bras de levage (23) et/ou une flèche télescopique et/ou un dispositif de levage à trois points, une unité de commande (12, 14) étant notamment prévue pour commander électriquement et/ou électroniquement le moteur électrique (4) et/ou l'accumulateur d'énergie (10), **caractérisée en ce qu'**une chaîne de freinage reliée fonctionnellement est prévue qui comprend l'élément de freinage (22) de l'unité de freinage (7, 16) et l'unité de transmission (5) ainsi que l'au moins une roue d'entraînement (20), l'unité de transmission (5) étant disposée au moins entre l'au moins une roue d'entraînement (20) et l'élément de freinage (22), de sorte qu'une force de freinage de l'unité de freinage (7, 16) et/ou de l'élément de freinage (22) puisse être transmise par le biais de l'unité de transmission (5) à l'au moins une roue d'entraînement (20).

2. Machine de travail selon la revendication 1, **caractérisée en ce que** la roue d'entraînement (20) de l'essieu d'entraînement (3) est conçue au moins comme une roue d'entraînement gauche et/ou droite (20), en particulier l'essieu d'entraînement (3) comportant au moins une unité différentielle (6) entre les roues d'entraînement gauche et droite (20).

3. Machine de travail selon l'une des revendications précédentes, **caractérisée en ce qu'**une chaîne d'entraînement reliée fonctionnellement est prévue qui comprend le moteur électrique (4) et l'unité de transmission (5) ainsi que l'au moins une roue d'entraînement (20), l'unité de freinage (4) étant disposée entre le moteur électrique (4) et l'unité différentielle (6) ou l'au moins une roue d'entraînement (20).

4. Machine de travail selon l'une des revendications précédentes, **caractérisée en ce que** la vitesse de rotation d'entraînement de l'entraînement de l'unité de transmission (5) est supérieure à la vitesse de rotation de sortie de la sortie de sorte que l'unité de transmission (5) présente une réduction.

5. Machine de travail selon l'une des revendications précédentes, **caractérisée en ce que** l'essieu d'entraînement (3) est conçu comme un essieu arrière et/ou un essieu avant.

6. Machine de travail selon l'une des revendications précédentes, **caractérisée en ce que**
l'essieu arrière comprend au moins une unité de freinage d'essieu arrière conçue comme unité de freinage (7, 16) et comportant un élément de frein d'essieu arrière et au moins une unité de transmission d'essieu arrière conçue comme unité de transmission (5), l'unité de transmission d'essieu arrière étant disposée au moins entre l'au moins une roue d'entraînement (20) de l'essieu arrière et l'élément de freinage d'essieu arrière de sorte qu'une force de freinage d'essieu arrière de l'unité de freinage d'essieu arrière et/ou de l'élément de freinage d'essieu arrière puisse être transmise à l'au moins une roue d'entraînement (20) de l'essieu arrière par le biais de l'unité de transmission d'essieu arrière,
et l'essieu avant comprend au moins une unité de freinage d'essieu avant conçue comme unité de freinage (7, 16) et comportant un élément de freinage d'essieu avant et au moins une unité de transmission d'essieu avant conçue comme unité de transmission (5), l'unité de transmission d'essieu avant étant disposée au moins entre l'au moins une roue d'entraînement (20) de l'essieu avant et l'élément de freinage d'essieu avant de sorte qu'une force de freinage d'essieu avant de l'unité de freinage d'essieu avant et/ou de l'élément de freinage d'essieu avant puisse être transmise par le biais de l'unité de transmission d'essieu avant à au moins une roue d'entraînement de l'essieu avant.

7. Machine de travail selon l'une des revendications précédentes, **caractérisée en ce que** l'unité d'entraînement (21) comprend au moins l'unité de transmission (5), l'unité de transmission (5) étant disposée au moins entre le moteur électrique (4) et la roue d'entraînement (20) de sorte qu'une force d'entraînement du moteur électrique (4) puisse être transférée par le biais de l'unité de transmission (5) à l'au moins une roue d'entraînement (20).

8. Machine de travail selon l'une des revendications précédentes, **caractérisée en ce que**
l'essieu arrière comprend au moins une unité d'entraînement d'essieu arrière conçue comme unité d'entraînement (21) et comportant un moteur électrique d'essieu arrière et au moins une unité d'entraînement d'essieu arrière conçue comme unité de transmission (5), l'unité de transmission d'essieu arrière étant disposée au moins entre l'au moins une roue d'entraînement (20) de l'essieu arrière et le moteur électrique d'essieu arrière de sorte qu'une force d'entraînement d'essieu arrière du moteur électrique d'essieu arrière puisse être transmise par le biais de l'unité de transmission d'essieu arrière à l'au moins une roue d'entraînement (20) de l'essieu arrière,
et l'essieu avant comprend au moins une unité d'entraînement d'essieu avant conçue comme unité d'entraînement (21) et comportant un moteur électrique d'essieu avant et au moins une unité de transmission d'essieu avant conçue comme unité de transmission (5), l'unité de transmission d'essieu avant étant disposée au moins entre l'au moins une roue d'entraînement (20) de l'essieu avant et le moteur électrique d'essieu avant de sorte qu'une force d'entraînement d'essieu avant du moteur électrique d'essieu avant puisse être transmise par le biais de l'unité de transmission d'essieu avant à au moins une roue d'entraînement (20) de l'essieu avant.

9. Machine de travail selon l'une des revendications précédentes, **caractérisée en ce que** le moteur électrique (4) et/ou le moteur électrique d'essieu avant et/ou le moteur électrique d'essieu arrière comporte au moins un carter moteur, au moins un dispositif de freinage (16) destiné à freiner un arbre moteur étant disposé sur le carter moteur.

10. Machine de travail selon l'une des revendications précédentes, **caractérisée en ce qu'**au moins un moteur de pompe (9) est prévu pour entraîner une pompe hydraulique d'un système hydraulique comprenant un liquide hydraulique.

11. Machine de travail selon l'une des revendications précédentes, **caractérisée en ce que** le moteur de pompe (9) et/ou la pompe hydraulique et/ou le système hydraulique sont conçus pour faire fonctionner l'outil de travail (19) et/ou le dispositif de retenue d'outil (18, 23) et/ou le dispositif de support (23).

12. Machine de travail selon l'une des revendications précédentes, **caractérisée en ce qu'**au moins une direction articulée (15) est prévue.
